(19) Europäisches Patentamt
European Patent Office
Office européen des brevets

(11) **EP 4 155 673 B1**

(12) **EUROPEAN PATENT SPECIFICATION**

(45) Date of publication and mention
of the grant of the patent:
**08.04.2026 Bulletin 2026/15**

(21) Application number: **21807516.6**

(22) Date of filing: **18.05.2021**

(51) International Patent Classification (IPC):
*G01C 21/16* (2006.01)   *G01C 22/02* (2006.01)
*G01C 25/00* (2006.01)   *G01S 5/16* (2006.01)
*G01S 7/40* (2006.01)   *G01S 7/497* (2006.01)
*G01S 13/86* (2006.01)   *G01S 17/86* (2020.01)
*G06T 7/80* (2017.01)

(52) Cooperative Patent Classification (CPC):
**G01S 5/163; G01C 21/165; G01C 21/1652;
G01C 22/02; G01C 25/005; G01S 7/4082;
G01S 7/4972; G01S 13/865; G01S 13/867;
G01S 17/86; G06T 7/80**

(86) International application number:
**PCT/CN2021/094433**

(87) International publication number:
**WO 2021/233309 (25.11.2021 Gazette 2021/47)**

(54) **EXTRINSIC PARAMETER CHANGE DETECTION METHOD AND APPARATUS, ELECTRONIC DEVICE, AND DETECTION SYSTEM**

VERFAHREN UND VORRICHTUNG ZUR ERKENNUNG EXTRINSISCHER PARAMETERÄNDERUNGEN, ELEKTRONISCHE VORRICHTUNG UND ERKENNUNGSSYSTEM

PROCÉDÉ ET APPAREIL DE DÉTECTION DE CHANGEMENT DE PARAMÈTRE EXTRINSÈQUE, DISPOSITIF ÉLECTRONIQUE ET SYSTÈME DE DÉTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2020 CN 202010436800**

(43) Date of publication of application:
**29.03.2023 Bulletin 2023/13**

(73) Proprietor: **Hangzhou Hikvision Digital
Technology Co., Ltd.
Hangzhou, Zhejiang 310051 (CN)**

(72) Inventors:
• **WAN, Fuhua
Hangzhou, Zhejiang 310051 (CN)**
• **LV, Jixin
Hangzhou, Zhejiang 310051 (CN)**
• **SUN, Jie
Hangzhou, Zhejiang 310051 (CN)**

(74) Representative: **BRP Renaud & Partner mbB
Rechtsanwälte Patentanwälte
Steuerberater
Königstraße 28
70173 Stuttgart (DE)**

(56) References cited:
**CN-A- 106 403 998   CN-A- 107 328 411
CN-A- 109 949 372   CN-A- 110 782 496
CN-A- 111 060 138   CN-A- 111 060 138
US-A1- 2019 324 483   US-A1- 2022 319 050**

• **MEDHAT OMR ET AL: "Using multiple portable/ wearable devices for enhanced misalignment estimation in portable navigation", GPS SOLUTIONS, 1 April 2016 (2016-04-01), Berlin/ Heidelberg, XP055299486, ISSN: 1080-5370, DOI: 10.1007/s10291-016-0531-3**

## Description

The present application claims the priority to a Chinese patent application No.202010436800.3 filed with the China National Intellectual Property Administration on May 21, 2020 and entitled "Extrinsic parameter change detection method and apparatus, electronic device and detection system".

## Technical field

The present application relates to the field of detection technology, in particular to a method, an apparatus for detecting changes of extrinsic parameters and a detection system.

## Background

With the continuous development of detection technology, the detection functions of detection systems are becoming more and more abundant. A detection system is usually required to be able to detect various types of data. Therefore, a detection system will be arranged with multiple sensors, for example, the detection system will be arranged with any two or more sensors, such as a lidar, a millimeter wave radar, a monocular/binocular camera, a depth camera, an event camera, a wheel speed sensor, a steering wheel angle sensor, an IMU (Inertial Measurement Unit), a GNSS (Global Navigation Satellite System), etc..

When setting the system, multiple sensors need to be calibrated through extrinsic parameters. Extrinsic parameters refer to the relative pose relationship between two sensors. Extrinsic parameter calibration of multiple sensors is to calibrate the relative pose relationship between every two sensors. The accuracy of extrinsic parameter calibration directly affects the detection accuracy of the detection system.

Due to the influence of various reasons such as vibration, impact, mechanical wear, etc., the pose of the sensors may change, which renders the actual pose relationship between the two sensors to be inconsistent with the calibrated extrinsic parameters, that is, the calibrated extrinsic parameters are inaccurate, which affects the detection accuracy of the detection system. In order to adjust the extrinsic parameters as soon as possible and ensure the detection accuracy of the detection system, how to detect the changes of the extrinsic parameters of the sensor has become an urgent technical problem to be solved.

MEDHAT OMR ET AL: "Using multiple portable/wearable devices for enhanced misalignment estimation in portable navigation", GPS SOLUTIONS, 1 April 2016 (2016-04-01), Berlin/Heidelberg ISSN: 1080-5370, DOI: 10.1007/s10291-016-0531-3 relates to using multiple portable/wearable devices for enhanced misalignment estimation in portable navigation. Global navigation satellite system (GNSS), such as global positioning system (GPS), has been widely used for vehicular and outdoor navigation. Accuracy is one, among many, of the advantages of using GNSS in the open sky. However, GNSS finds difficulty in achieving similar results in portable navigation, where users spend most of their time indoors or in urban canyons, places where GNSS signals suffer from multipath error or signal blockage. One of the most common solutions for providing location services in such challenging environments is integrating GNSS with inertial sensors, such as accelerometers and gyroscopes. However, the arbitrary orientation of the portable device can present a more difficult challenge when using inertial sensors for portable navigation. In order to obtain a navigation solution using inertial sensors, an accurate heading estimation is required. Resolving the heading misalignment angle between the portable navigation device and the moving platform, such as using the device while walking or in a vehicle while driving, is critical to obtaining an accurate heading estimation. We present a solution for resolving the misalignment between the portable device and the moving platform, which exploits multiple portable devices like smartphones or tablets and/or smart wearable devices such as smart watches, smart glasses, and/or smart fitness and activity trackers/monitors. Several real field test experiments using portable devices were conducted to examine the performance of the proposed method. Results show how a portable navigation solution can be improved by further enhancing misalignment estimation.

CN 111 060 138 A relates to calibration method and apparatus, processor, electronic device, and storage medium. The calibration method includes: at least two poses of an imaging device are acquired, and at least two pieces of first sampling data of an inertial sensor are acquired; spline fitting process is performed on the at least two poses to obtain a first spline curve, and spline fitting process is performed on the at least two pieces of first sampling data to obtain a second spline curve; and time-space deviation between the imaging device and the inertial sensor is obtained according to the first spline curve and the second spline curve, where the time-space deviation includes at least one of a pose conversion relationship or a sampling time offset.

## Summary

The purpose of the embodiments of the present application is to provide a method, an apparatus for detecting changes of extrinsic parameter, an electronic device and a detection system, so as to detect changes of the extrinsic parameters of sensors. The specific technical solutions are as follows:

The invention is set out in the appended claims.

In a first aspect, an embodiment of the present application provides a method for detecting changes of extrinsic parameters, including:

acquiring respective pieces of pose data of any two sensors in a plurality of sensors at different moments;

determining the difference in pose changes of the two sensors according to the respective pieces of pose data;

determining that the extrinsic parameters of the two sensors have changed if the difference in pose changes reaches a preset difference level.

In a second aspect, an embodiment of the present application provides an apparatus for detecting changes of extrinsic parameters, including:

an acquisition module, which is configured for acquiring respective pieces of pose data of any two sensors in a plurality of sensors at different moments;

an analysis module, which is configured for determining the difference in pose changes of the two sensors according to the respective pieces of pose data;

a detection module, which is configured for determining that the extrinsic parameters of the two sensors have changed if the difference in pose changes reaches a preset difference level.

In a third aspect, an embodiment of the present application provides an electronic device, including a processor and a memory, wherein the memory stores machine executable instructions that may be executed by the processor and are loaded and executed by the processor to perform the method provided in the first aspect of the embodiment of the present application.

In a fourth aspect, an embodiment of the present application provides a machine-readable storage medium that stores machine executable instructions thereon, which, when loaded and executed by a processor, cause the processor to perform the machine executable instructions implement the method provided in the first aspect of the embodiment of the present application.

In a fifth aspect, an embodiment of the present application provides a detection system, which comprises an electronic device and a plurality of sensors;

the plurality of sensors are configured for collecting data and sending collected data to the electronic device;

the electronic device is configured for acquiring respective pieces of pose data of any two sensors at different moments; determining the difference in pose changes of the two sensors according to the respective pieces of pose data; determining that the extrinsic parameters of the two sensors have changed if the difference in pose changes reaches a preset difference level.

By applying the method and apparatus for detecting changes of extrinsic parameters, the electronic device and the detection system provided by the embodiments of the present application, respective pieces of pose data of any two sensors in a plurality of sensors at different moments are acquired to determine the difference in pose changes of the two sensors is determined and it is determined that the extrinsic parameters of the any two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the pose of the two sensors to a same coordinate system in which there is no difference in the pose changes of the two sensors. However, if it is determined that there is a difference in the pose change between the two sensors, and the difference in the pose change reaches a preset difference level, it means that the pose changes of the two sensors are inconsistent, so that it can be determined that the extrinsic parameters of the two sensors have changed, and the detection of the changes of the extrinsic parameters of the sensors is realized.

## Brief Description of the Drawings

In order to more clearly explain the embodiments of the present application and the technical solutions of the prior art, the following briefly introduces the drawings required in the embodiments and the prior art.

Fig. 1 is a schematic flowchart of a method for detecting changes of extrinsic parameter according to an embodiment of the present application;

Fig. 2 is a schematic flowchart of acquiring pose data according to an embodiment of the present application;

Fig. 3 is a schematic flowchart of a method for detecting changes of extrinsic parameters according to another embodiment of the present application;

Fig. 4 is a schematic flowchart of a method for detecting changes of extrinsic parameters according to yet another embodiment of the present application;

Fig. 5 is a schematic flowchart of a method for detecting changes of extrinsic parameters according to yet another embodiment of the present application;

Fig. 6 is a schematic flowchart of a method for detecting changes of extrinsic parameters according to yet another embodiment of the present application;

Fig. 7 is a schematic diagram of the execution framework of the method for detecting changes of extrinsic parameters according to an embodiment of the present application;

Fig. 8 is a schematic diagram of the data flow of the method for detecting changes of extrinsic parameters according to an embodiment of the present application;

Fig. 9 is a schematic flowchart of sub-steps of pose interpolation and coordinate transformation according to an embodiment of the present application;

Fig. 10 is a schematic flowchart of pose interpolation and coordinate transformation according to an embodiment of the present application;

Fig. 11 is a schematic flowchart of the steps of detecting changes of extrinsic parameters according to an embodiment of the present application;

Fig. 12 is a schematic structural diagram of an apparatus for detecting changes of extrinsic parameters according to an embodiment of the present application;

Fig. 13 is a schematic structural diagram of an electronic device according to an embodiment of the present application;

Fig. 14 is a structural diagram of a detection system according to an embodiment of the present application.

## Detailed Description

In order to make the objectives, technical solutions, and advantages of the present application clearer, the present application will be described in further detail below with reference to the attached drawings and examples. Obviously, the described embodiments are only part of the embodiments of the present application, but not all of them. All other embodiments obtained based on the embodiments in the present application by those ordinary skilled in the art without creative efforts fall within the protection scope of the present application.

In order to detect changes of extrinsic parameters of sensors, the embodiments of the invention provide a method, an apparatus, an electronic device and a system for detecting changes of extrinsic parameters. In the following, the method for detecting changes of extrinsic parameters provided by the embodiments of the present application is first introduced.

The executing subject of the method for detecting changes of extrinsic parameters provided in the embodiments of the present application may be an extrinsic parameter calibration device with an extrinsic parameter calibration function, or may be a detection device with a parameter change detection function, or may be various sensors in the detection system, which is not specifically limited here and hereinafter collectively referred to as an electronic device. The way to realize the method for detecting changes of extrinsic parameters provided in the embodiments of the present application may be at least one of software, hardware circuits and logic circuits arranged in the electronic devices.

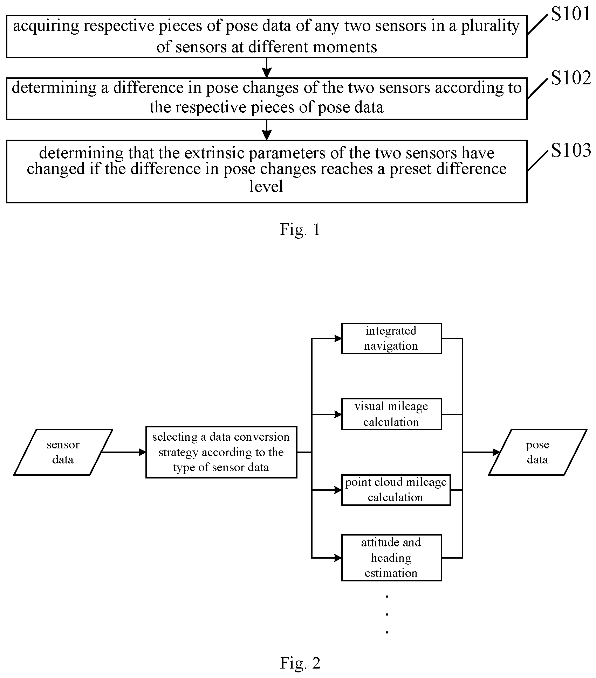

As shown in Fig. 1, a method for detecting changes of extrinsic parameters according to an embodiment of the present application includes the following steps.

S101, acquiring respective pieces of pose data of any two sensors in a plurality of sensors at different moments.

S102, determining a difference in pose changes of the two sensors according to the respective pieces of pose data.

S103, determining that the extrinsic parameters of the two sensors have changed if the difference in pose changes reaches a preset difference level.

Applying the solutions provided in the embodiments of the present application, respective pieces of pose data of any two sensors in a plurality of sensors at different moments are acquired to determine the difference in pose changes of the two sensors according to the respective pieces of pose data, and it is determined that the extrinsic parameters of the two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the poses of the two sensors to a same coordinate system, in which there is no difference in the pose changes of the two sensors. However, if it is determined that there is a difference in the pose change between the two sensors, and the difference in the pose change reaches a preset difference level, it means that the pose changes of the two sensors are inconsistent, so that it can be determined that the extrinsic parameters of the two sensors have changed, and the detection of the changes of the extrinsic parameters of the sensors is realized.

The method for detecting changes of extrinsic parameters provided by the embodiment of the present application is suitable for a detection system with a plurality of sensors, which detects changes of the extrinsic parameters of every two sensors in the plurality of sensors. The plurality of sensor refers to two or more sensors, such as a lidar, a millimeter wave radar, a monocular/binocular camera, a depth camera, an event camera, a wheel speed sensor, a steering wheel angle sensor, IMU, GNSS, etc., that can directly or indirectly obtain pose data. Pose data is the general term of position data and posture data, which can include only position data or posture data, or both position data and posture data. The pose data may be relative (that is, the pose data of one sensor relative to another sensor or the pose data of a sensor at one moment relative to another moment) or absolute (that is, the pose data obtained by one sensor at a certain moment). The pose data may be directly output by the sensor, or may be obtained by operating the data output by the sensor through a specific algorithm. The pose data may be three-dimensional or two-dimensional.

In an implementation of the embodiment of the present application, the pose data of each sensor at different moments may be obtained, and when it is necessary to detect the changes of extrinsic parameters of two sensors, the pose data of these two sensors at different moments may be extracted.

Alternatively, S101 may specifically be: acquiring respective pieces of sensor data collected by any two sensors in a plurality of sensors at different moments; converting the respective pieces of sensor data into pose data by using data conversion strategies respectively corresponding to types of the respective pieces of sensor data.

Each sensor has a function of data acquisition, and can collect the corresponding types of sensor data, such as point cloud data collected by lidars, image data collected by monocular/binocular cameras, etc.. When collecting sensor data, each sensor can carry the type of sensor data in the data information, so that when sensor data is acquired, the type of the sensor data can be directly obtained therefrom. Different types of sensor data correspond to different data conversion strategies, and corresponding data conversion strategies may be used to convert sensor data into pose data. Fig. 2 is a schematic flowchart of acquiring pose data according to the embodiment of the present application, which includes: acquiring sensor data collected by each sensor; selecting a data conversion strategy according to the type of the sensor data; using the corresponding data conversion strategy to convert the sensor data to obtain the pose data. For example, if the sensor collects acceleration, linear velocity and satellite positioning data, the integrated navigation method may be used to convert the acceleration, linear velocity and satellite positioning data into pose data. If the sensor collects image data, the visual mileage calculation method may be used to convert the image data into pose data. If the sensor collects three-dimensional point cloud data, the point cloud mileage calculation method may be used to convert the three-dimensional point cloud data into pose data. If the sensor collects angular velocity and linear velocity, the attitude and heading estimation method may be used to convert the angular velocity and linear velocity into pose data.

For ease of understanding, the monocular vision mileage calculation method and point cloud mileage calculation method suitable for monocular cameras and lidars are taken as examples below to describe the specific acquisition methods of pose data, and the methods of acquiring corresponding pose data from other types of sensor data will not be repeated here. One of the implementations to realize the monocular vision mileage calculation is as follows: the monocular vision mileage calculation is divided into two stages: initialization and normal operation.

The initialization process is: extracting image feature points from the input two frames of image data before and after, for example, extracting SIFT (Scale-Invariant Feature Transform) features from the two frames of image data respectively, and then matching the SIFT features in the two frames of image data to obtain possible feature point matching relationship pairs. According to these matching relationship pairs, the E matrix (Essential Matrix) may be calculated. Further, the E matrix may be decomposed, and one of the effective rotation matrices R and translation vector t may be selected and combined as a rotation and translation matrix T. After obtaining the pose relationship (rotation and translation matrix T), feature point coordinates and matching relationship between the two frames of image data, the depth of each feature point (that is, the vertical distance of a three-dimensional point in space from the camera) may be calculated by a triangulation method, and thus the three-dimensional coordinates of each feature point may be obtained. At this point, the initialization process ends.

The normal operation process is: extracting feature points from the current frame of image data, and matching through calculations the extracted feature points and the feature points in the previous frame of image data whose three-dimensional points can be calculated by a triangulation method, to thereby obtain the matching relationship between the feature points of the current frame of image data and the three-dimensional points in the previous frame of image data. According to the matching relationship, PnP (persistent-n-point, a method that can calculate the phase and pose according to the matching relationship of 3D-2D points) may be used to solve the rotation and translation matrix of the current frame of image data relative to the previous frame of image data, the rotation and translation matrix is the pose relationship between the two frames of image data before and after. By using the rotation and translation matrix, the pose data of the previous frame of image data may be calculated to obtain the pose data of the current frame of image data. The subsequent image data is processed in the same way, that is, the process of obtaining pose data from the image data is realized.

The input of the point cloud mileage calculation method is a series of point clouds in units of frames. The next frame of point clouds and the previous frame of point clouds are registered by an ICP (Iterative Closest Point) algorithm, so that the two frames of the point clouds can be well matched together. When the point clouds are matched, the pose relationship between the two frames of the point clouds before and after may be obtained. Using this pose relationship, the pose data of the previous frame of point clouds may be calculated to obtain the pose data of the current frame of point clouds.

Each sensor will output sensor data or pose data at a certain frequency. Therefore, the electronic device can obtain a series of pose data at different moments from one sensor. For one sensor, the pose data acquired at different moments will change. The pose data acquired at different moments may be analyzed and calculated to get the pose change of the sensor. That is, the pose change of each sensor may be obtained, and the difference in pose changes of the two sensors may be compared accordingly. The difference in pose changes is a measurement value, which may be a specific difference, for example the difference in pose changes of two sensors is 50%, the difference in angle changes is 30 degrees, and so on. It can also be a statistical value at a moment when there is a difference, for example, there is a difference in pose changes of the two sensors in 50% of time in a period of time, and it can also be a value representing other metrics, which will not be repeated here.

Generally, due to the constraints of extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the poses of the two sensors to a same coordinate system, in which there is no difference in the pose changes of the two sensors. However, if the pose changes are quite different (reaching the preset difference level), it means that the pose changes of the two sensors have been inconsistent, that is, the extrinsic parameters of the two sensors have changed.

In practice, the pose change may be the change of the pose data at a series of different moments, or may be the change of the pose data at two adjacent moments. Correspondingly, the difference in pose changes may be the overall difference in pose changes between two sensors within a period of time, or it may be the difference in pose changes of two sensors at a certain moment. In order to analyze the pose changes more comprehensively and accurately, generally, the overall analysis within a period of time is adopted, specifically, it is possible to determine the difference in pose changes of the two sensors at different moments within a period of time, if there are differences in the pose change at most moments (greater than a preset proportion), the extrinsic parameters are considered to have changed. It is also possible to determine the respective pose changing trends of the two sensors within a period of time, and then the two pose changing trends are compared to analyze the difference degree of the two pose changing trends. If the difference degree is large (greater than a preset degree), it is considered that the extrinsic parameters have changed. There are many ways to determine whether the extrinsic parameters of the two sensors have changed by using the difference in pose changes, which will not be listed here.

Alternatively, S102 may be specifically implemented by the following steps:

Step 1, calculating respective relative poses of the two sensors at different moments according to the respective pieces of pose data, wherein each relative pose includes the relative pose angle of the pose data at a current moment relative to the pose data at a previous adjacent moment.

Step 2, calculating respective relative pose deviations of the two sensors at different moments according to the respective relative poses, wherein each relative pose deviation includes a posture deviation and a translation deviation.

Step 3, calculating respective pose deviation weights and respective translation deviation weights of the two sensors at different moments according to respective relative posture angles.

Step 4, weighting and summing respective pose deviations and translation deviations of the two sensors at different moments according to the respective posture deviation weights and respective translation deviation weights of the two sensors at different moments to obtain the extrinsic parameter change score result for the two sensors, wherein the extrinsic parameter change score result characterizes the difference in pose changes of the two sensors.

Accordingly, S103 may specifically be: determining that the extrinsic parameters of the two sensors have changed if the extrinsic parameter change score result is greater than a preset threshold.

The relative pose is the change of the pose data at a current moment relative to the pose data at a previous adjacent moment. Specifically, the change may be the relative posture angle. The respective relative poses of the two sensors at different moments may be calculated according to the respective pieces of pose data of the two sensors. For example, the relative pose of a lidar at moment 2 is the change of the pose data at moment 2 relative to the pose data at moment 1, which may be calculated by formula (1).

$$\Delta T_{L12} = T_{L1}^{-1} * T_{L2} \qquad\qquad (1)$$

Wherein, $\Delta T_{L12}$ is the relative pose of lidar L at moment 2, $T_{L1}$ is the pose data of lidar L at moment 1, $T_{L1}^{-1}$ is the inverse of $T_{L1}$, $T_{L2}$ is the pose data of lidar L at moment 2, and moment 1 and moment 2 are adjacent moments.

$\Delta T_{L12} T_{L1} T_{L1}^{-1} T_{L1} T_{L2}$

The respective relative pose deviations of the two sensors at different moments may be calculated according to the respective relative poses of the two sensors at different moments. For example, the relative pose deviation of a lidar and a monocular camera at moment 2 may be specifically calculated by formula (2).

$$\Delta T_{CL12} = \Delta T_{C12}^{-1} * \Delta T_{L12} \qquad\qquad (2)$$

Wherein, $\Delta T_{CL12}$ is the relative pose deviation of lidar L and monocular camera C at moment 2, $\Delta T_{C12}^{-1}$ is the inverse of the relative pose of monocular camera C at moment 2 and $\Delta T_{L12}$ is the relative pose of lidar L at moment 2. Relative pose deviation $\Delta T_{CL12} \Delta T_{CL12}$ includes a posture deviation $\Delta R_{CL}$ and a translation deviation $\Delta t_{CL}$, and the pose deviation angle corresponding to $\Delta R_{CL}$ may be recorded as $\Delta \varphi$. When the output data types or dimensions of the two sensors are different, such as the single-axis IMU only outputs one-dimensional posture information, while the lidar may output three-dimensional position and posture information, the deviation of the common output information is calculated, that is, only one-dimensional posture deviation is calculated, and the translation deviation is set to 0.

Relative pose includes relative posture angle $\theta \in (-\pi, \pi)$, which determines the weights of the posture deviation and the translation deviation. Specifically, respective posture deviation weights and respective translation deviation weights of the two sensors at different moments may be calculated according to respective relative posture angles. Specifically, one-half sine value of relative posture angle may be taken as the posture deviation weight, and the sum of the absolute value of one-half sine value of the relative posture angle and one-half cosine value of the relative posture angle may be taken as the translation deviation weight. Then, respective posture deviations and respective translation deviations of the two sensors at different moments are weighted and summed according to respective posture deviation weights and respective translation deviation weights of the two sensors at different moments so as to obtain the extrinsic parameter change score result of the two sensors. The extrinsic parameter change score result characterizes the difference in pose changes of the two sensors, that is to say, the larger the value of the extrinsic parameter change score result is, the greater the difference in pose changes of the two sensors is. Specifically, the extrinsic parameter change score result can be calculated by using formula (3). $\theta \in (-\pi, \pi)$

$$\text{score} = \left(\sum_{i=0}^{n}\left(\left\|\Delta\varphi_i * \sin\frac{\theta_i}{2}\right\| + \|\Delta t_i\| * \left(\left\|\sin\frac{\theta_i}{2}\right\| + \cos\frac{\theta_i}{2}\right)\right)\right)/n \quad (3)$$

Wherein, score is the extrinsic parameter change score result, n is the number of relative poses, $\Delta\varphi_i$ is the posture deviation angle corresponding to the ith relative pose, $\theta_i$ is the relative posture angle corresponding to the ith relative pose, $\Delta t_i$ is the translation deviation corresponding to the ith relative pose, $\sin\frac{\theta_i}{2}$ is the posture deviation weight, $\left\|\sin\frac{\theta_i}{2}\right\| + \cos\frac{\theta_i}{2}$ is the translation deviation weight.

The extrinsic parameter change score result is compared with a preset threshold, if the extrinsic parameter change score result is greater than the preset threshold, it is considered that the extrinsic parameters of the two sensors have changed. The preset threshold is set according to the actual requirements. The preset threshold may be set to a larger value in case of a high tolerance to extrinsic parameter changes, otherwise, it may be set to a smaller value.

Alternatively, after obtaining a determination result that the extrinsic parameters have changed, the method may further include outputting the extrinsic parameter change score result as a detection confidence.

After determining that the extrinsic parameters of the two sensors have changed, the calculated extrinsic parameter change score result may also be output as the detection confidence, which characterizes the reliability of the detection result. The higher the extrinsic parameter change score result is, the greater the difference in the extrinsic parameter changes of the two sensors is, and it can be directly determined from the detection confidence whether the determination result that the extrinsic parameters have changed are reliable.

All pairwise combinations of sensors can be processed as described above, and the detection results and detection confidences of whether the extrinsic parameters are changed among all sensors can be obtained.

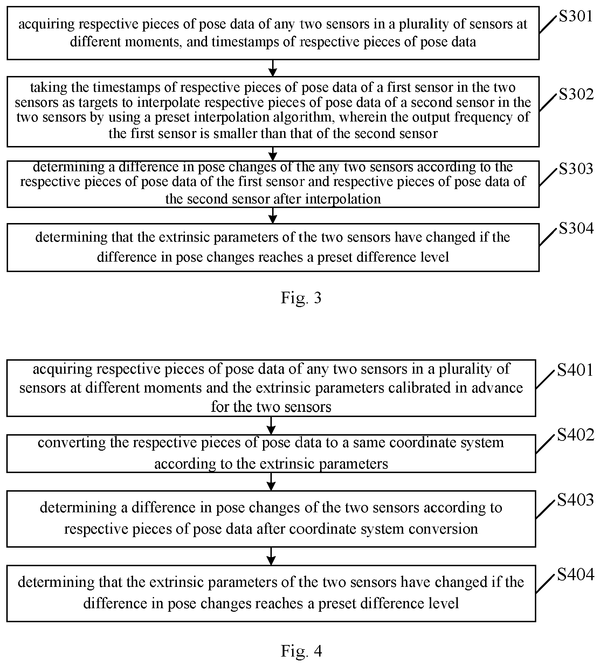

Based on the embodiment shown in Fig. 1, an embodiment of the present application also provides a method for detecting changes of extrinsic parameters, as shown in Fig. 3, which includes the following steps.

S301, acquiring respective pieces of pose data of any two sensors in a plurality of sensors at different moments, and timestamps of respective pieces of pose data.

S302, taking the timestamps of respective pieces of pose data of a first sensor in the two sensors as targets to interpolate respective pieces of pose data of a second sensor in the two sensors by using a preset interpolation algorithm, wherein the output frequency of the first sensor is smaller than that of the second sensor.

S303, determining a difference in pose changes of the any two sensors according to the respective pieces of pose data of the first sensor and respective pieces of pose data of the second sensor after interpolation.

S304, determining that the extrinsic parameters of the two sensors have changed if the difference in pose changes reaches a preset difference level.

Different sensors may have different output frequencies, thus when the electronic device acquires respective pieces of pose data of each sensor at different moments, there may be a lot of data that do not correspond to each other in terms of time. The timestamp of each pose data refers to the time stamped on the pose data when the sensor acquires the pose data, and the data that does not correspond to each other in terms of time means that the timestamps of various types of pose data are different and thus it is necessary to process the pose data so that the pose data of the two sensors can coincide in terms of time. In the embodiment of the present application, an interpolation method can be used for this purpose. The interpolation process is as follows: respectively obtaining the timestamps of respective pieces of pose data of two sensors, selecting one sensor (usually the sensor with a lower output frequency, referred to as the first sensor in this embodiment) as an interpolation target, and taking the timestamps of respective pieces of pose data of the first sensor as targets, performing interpolation operations on respective pieces of pose data of the second sensor. That is, at the moment corresponding to the timestamp of each pose data of the first sensor, performing, according to the pose data of the second sensor close to this moment, an interpolation operation at this moment to obtain the pose data of the second sensor at the moment. Specifically, when interpolating position data, interpolation methods such as linear interpolation, bicubic interpolation, spline interpolation may be used, and when interpolating posture data, interpolation methods such as a spherical interpolation may be used. After interpolating the pose data, respective pieces of pose data of the two sensors can overlap in terms of time, so that a more accurate difference in pose changes may be obtained.

Based on the embodiment shown in Fig. 1, an embodiment of the present application also provides a method for detecting changes of extrinsic parameters, as shown in Fig. 4, which may include the following steps.

S401, acquiring respective pieces of pose data of any two sensors in a plurality of sensors at different moments and the extrinsic parameters calibrated in advance for the two sensors.

S402, converting the respective pieces of pose data to a same coordinate system according to the extrinsic parameters.

S403, determining a difference in pose changes of the two sensors according to respective pieces of pose data after coordinate system conversion.

S404, determining that the extrinsic parameters of the two sensors have changed if the difference in pose changes reaches a preset difference level.

The pose data obtained from different sensors are often located in different coordinate systems. Therefore, before calculating the difference in pose changes, it is necessary to convert the pose data of respective sensors to a same coordinate system. Since the extrinsic parameters represent the relative pose relationship between the two sensors, which may be in a two-dimensional or three-dimensional form, the relationship between the two sensors' coordinate systems may be determined through the extrinsic parameters. Therefore, according to the extrinsic parameters, respective pieces of pose data of the two sensors may be converted to a same coordinate system, and the data in a same coordinate system is more convenient for operation, and a more accurate difference in pose changes can be obtained.

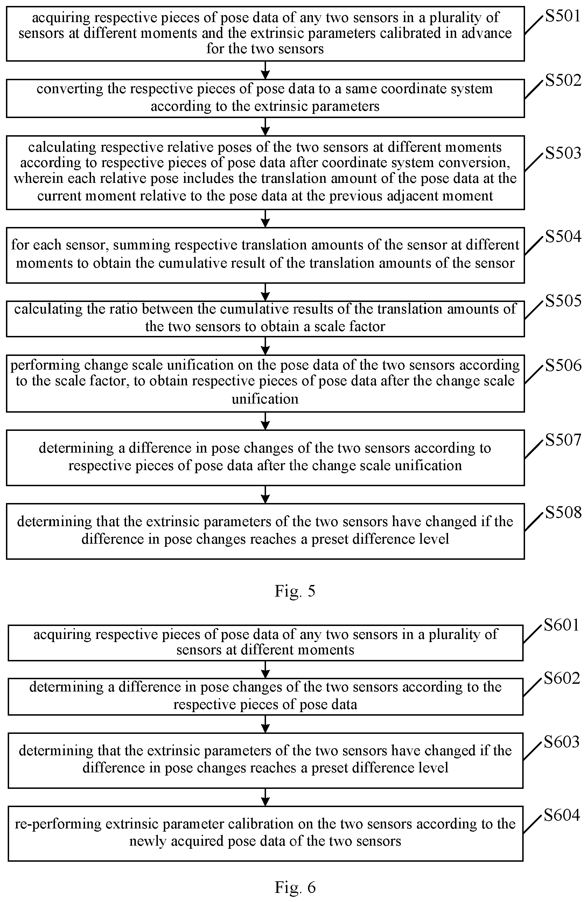

Based on the embodiment shown in Fig. 4, an embodiment of the present application also provides a method for detecting changes of extrinsic parameters, as shown in Fig. 5, which may include the following steps.

S501, acquiring respective pieces of pose data of any two sensors in a plurality of sensors at different moments and the extrinsic parameters calibrated in advance for the two sensors.

S502, converting the respective pieces of pose data to a same coordinate system according to the extrinsic parameters.

S503, calculating respective relative poses of the two sensors at different moments according to respective pieces of pose data after coordinate system conversion, wherein each relative pose includes the translation amount of the pose data at the current moment relative to the pose data at the previous adjacent moment.

S504, for each sensor, summing respective translation amounts of the sensor at different moments to obtain the cumulative result of the translation amounts of the sensor.

S505, calculating the ratio between the cumulative results of the translation amounts of the two sensors to obtain a scale factor.

S506, performing change scale unification on the pose data of the two sensors according to the scale factor, to obtain respective pieces of pose data after the change scale unification.

S507, determining a difference in pose changes of the two sensors according to respective pieces of pose data after the change scale unification.

S508, determining that the extrinsic parameters of the two sensors have changed if the difference in pose changes reaches a preset difference level.

For some special sensors, such as monocular cameras, the obtained pose data lacks scale information indicating the ratio between the pose scale of the sensor and the real physical scale. For this type of pose data, it is necessary to unify the change scale of this type of pose data based on the pose data of another sensor. The unification of the change scale is often carried out after the unification of the coordinate system. The specific process is: calculating the change amount (i.e., the relative pose) of the pose data at the current moment relative to the pose data at the previous adjacent moment of each sensor in a series of pose data. The calculation method of the relative pose is shown in formula (1). A series of relative posees of the two sensors may be obtained. The relative pose includes the relative posture angle and the translation amount. The translation amounts of the relative poses of the two sensors are summed respectively to calculate the ratio of the translation amounts of the two sensors after the summation, and then the scale factor S can be obtained. Taking the lidar L and the monocular camera C as an example, the scale factor may be calculated by formula (4).

$$S = \frac{\sum_{i=0}^{n} \|\Delta t_{Ci}\|}{\sum_{i=0}^{n} \|\Delta t_{Li}\|} \tag{4}$$

Wherein, S is the scale factor, n is the number of relative poses, $\Delta t_{Ci}$ is the translation amount of the ith relative pose of the monocular camera C, and $\Delta t_{Li}$ is the translation amount of the ith relative pose of the lidar L.

By using this scale factor, the pose data of the monocular camera and the lidar may be unified in terms of change scales. So far, a series of pose data of the two sensors in a uniform coordinate system with uniform change scales have been obtained, and more accurate difference in pose changes can be obtained.

Based on the embodiment shown in Fig. 1, an embodiment of the present application also provides a method for detecting changes of extrinsic parameters, as shown in Fig. 6, which can include the following steps.

S601: acquiring respective pieces of pose data of any two sensors in a plurality of sensors at different moments.

S602: determining a difference in pose changes of the two sensors according to the respective pieces of pose data.

S603, determining that the extrinsic parameters of the two sensors have changed if the difference in pose changes reaches a preset difference level.

S604: re-performing extrinsic parameter calibration on the two sensors according to the newly acquired pose data of the two sensors.

After it is determined that the extrinsic parameters of the two sensors have changed, in order to improve the accuracy of extrinsic parameter calibration and the detection accuracy of the detection system, the extrinsic parameter calibration may be re-performed on the two sensors according to the newly acquired pose data of the two sensors. The re-calibrated extrinsic parameters can comply with the current actual pose of the sensors, thus improving the detection accuracy of the detection system and realizing the automatic detection of changes of extrinsic parameters and automatic calibration of extrinsic parameters.

Of course, in another implementation, the electronic device may also inform the technician of the detection result that the extrinsic parameters have changed, so that the technician can manually mark the corresponding sensor extrinsic parameters.

For ease of understanding, the method for detecting changes of extrinsic parameters provided by the embodiment of the present application will be described in detail below with reference to specific examples.

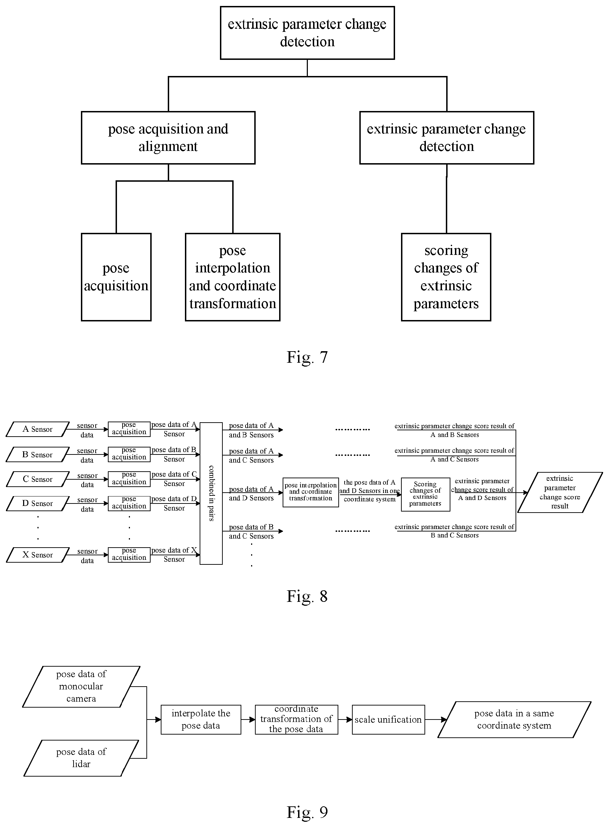

As shown in Fig. 7, the method for detecting changes of extrinsic parameters provided by the embodiment of the present application may be mainly divided into two steps: pose acquisition and alignment, and extrinsic parameter change detection. The step of pose acquisition and alignment includes two sub-steps of pose acquisition, pose interpolation and coordinate transformation. The step of extrinsic parameter change detection includes one sub-step of scoring the changes of the extrinsic parameters.

The data flow of the method provided in this embodiment of the present application is shown in Fig. 8. In the sub-step of pose acquisition, the input data is sensor data (such as point cloud data, image data, etc.), and the output data is pose data, which may be two-dimensional data or three-dimensional data. The pose data of all sensors are combined in pairs. The essence of the combination is to extract the pose data, i.e., extract the pose data of any two sensors at the same time. Here, one combination (pose data of A and D sensors) is selected for explanation, and the processing flow of other combinations is similar. In the sub-step of pose interpolation and coordinate transformation, the input data are pose data of A and D sensors, and the output data are pose data of A and D sensors which are aligned in terms of time after interpolation and located in a same coordinate system. In the sub-step of scoring the changes of the extrinsic parameters, the pose data of A and D sensors which are aligned in terms of time and located in a same coordinate system are input, and the extrinsic parameter change score result of A and D sensors are output.

The sub-step of pose acquisition is to process all kinds of different sensor data to obtain the corresponding pose data. It is assumed that the A and D sensors are a monocular camera and a lidar respectively, and the specific data conversion process is shown in the specific example of the embodiment shown in Fig. 1, which will not be repeated here.

The function of the sub-step of pose interpolation and coordinate transformation is to interpolate pose data of different sensors, so that pose data of different sensors may be aligned in terms of time and converted to a same coordinate system with a uniform scale.

The flow of the sub-steps of pose interpolation and coordinate transformation is shown in Fig. 9. Taking sensor A as the monocular camera C, D sensor as the lidar L, the image output frequency of the monocular camera C is 30Hz, and the output frequency of pose data of the monocular camera C obtained by the sub-step of pose acquisition is also 30 Hz; the typical point cloud frame output frequency of lidar L is 10Hz, and the output frequency of pose data of lidar L obtained by the sub-step of pose acquisition is also 10Hz. The extrinsic parameter obtained by the calibration in advance is $T_{CL}$ (base transformation from the monocular camera to the lidar). The pose data of lidar L are selected as the interpolation targets, and the pose data of monocular camera C are interpolated according to the timestamps of pose data of lidar L. The specific interpolation method is as follows:

Suppose there are two pieces of pose data of the monocular camera and one piece of pose data of the lidar, where this piece of pose data of the lidar is located between the two pieces of pose data of the monocular camera. It is necessary to obtain through interpolation the pose data of the monocular camera at the moment when this piece of pose data of the lidar is obtained. Namely:

$$t_{C1} > t_{L2} > t_{C3} \tag{5}$$

Wherein, $t_C$ represents the timestamp of the pose data of the monocular camera, and $t_L$ represents the timestamp of the pose data of the lidar. The pose data corresponding to the three moments are represented as follows: $T_{C1}$, $T_{L2}$, $T_{C3}$, $T_C$ represents the pose data of the monocular camera, and $T_{L2}$ represents the pose data of the lidar.

The purpose of interpolation is to use $T_{C1}$ and $T_{C3}$ to obtain the pose data of the monocular camera at the moment $t_{L2}$. Here, the spherical interpolation method is used to interpolate the posture data, and the linear interpolation method is used to interpolate the position data.

By performing the above operation on a series of pose data of two sensors, a series of pose data pairs may be obtained. So far, the interpolation process of pose data has been completed.

When transforming the coordinates of the pose data, the extrinsic parameter $T_{CL}$ calibrated in advance is used. A series of pose data of the lidar are transformed to the coordinate system of the monocular camera. The formula for transforming $T_{L2}$ to $T'_{L2}$ in the monocular camera coordinate system is as follows: $T_{L2} T'_{L2}$

$$T'_{L2} = T_{CL} * T_{L2} * T_{CL}^{-1} \qquad (6)$$

All the series of the pose data of the lidar are converted to the monocular camera coordinate system, and then the coordinate transformation operation is completed.

Since the pose information of the monocular camera lacks scale information, it is necessary to estimate the scale factor. In a series of pose data pairs, the change amount (hereinafter referred to as relative pose) of pose data at two adjacent moments before and after of each sensor is calculated. For example, the relative pose between pose data 1 and pose data 2 of the lidar transformed to the monocular camera coordinate system may be calculated as follows:

$$\Delta T'_{L12} = T'^{-1}_{L1} * T'_{L2} \qquad (7)$$

The relative pose of the lidar is also calculated using a similar formula. Thereby a series of relative poses of the two sensors are obtained. The scale factor S may be obtained by summing the translation amounts of the relative poses of the two sensors, and calculating the ratio of the translation amounts of the two sensors after the summation. The specific calculation method is to use formula (4). The pose data of the monocular camera and the lidar may be unified in terms of the change scales by using this scale factor. So far, a series of pose data of the two sensors in a same coordinate system with uniform change scales have been obtained.

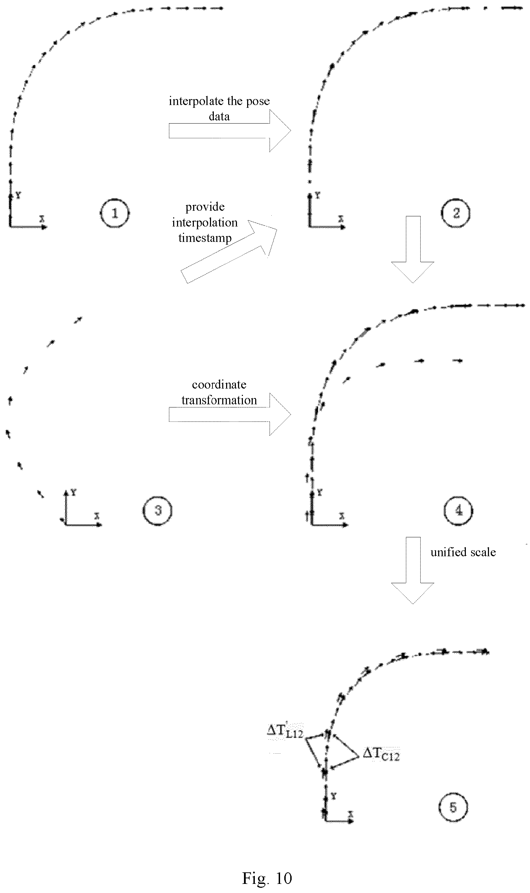

The process of pose interpolation and coordinate transformation is shown in Fig. 10. Curve 1 shows the pose data of a series of monocular cameras in the monocular camera coordinate system, curve 3 shows the pose data of a series of lidars in the lidar coordinate system, and curve 2 shows the results of the interpolation of pose data of the monocular cameras according to the timestamps of the pose data of the lidar. Curve 4 shows the results of transforming the pose data of the lidar to the monocular camera coordinate system by using the extrinsic parameters calibrated in advance, and curve 5 shows the results of change scale unification on the pose data of both after calculating the scale factor, in which the relative pose is shown.

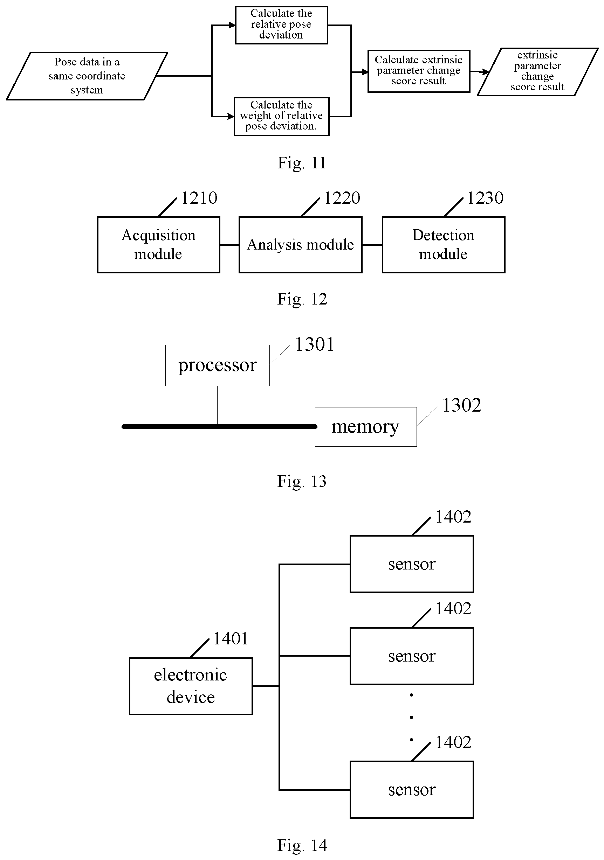

The function of the step of detecting changes of extrinsic parameters is to calculate an extrinsic parameter change score result according to a series of two relative poses that have been transformed into a unified coordinate system. The specific process is shown in Fig. 11. Firstly, the deviation of two relative poses is calculated, and the weight of relative poses to extrinsic parameters is calculated. Then, the extrinsic parameter change score result is calculated according to a series of relative poses deviation and weights.

Firstly, a series of relative pose deviations are calculated. Taking the calculation of the relative pose $\Delta T_{C12}$ and $\Delta T'_{L12}$ of the monocular camera and the lidar in the above example as an example, the calculation formula of the relative pose deviation is as follows:

$$\Delta T_{CL12} = \Delta T_{C12}^{-1} * \Delta T'_{L12} \qquad (8)$$

Wherein, $\Delta T_{CL12}$ is the relative pose deviation of the lidar and the monocular camera. Relative pose deviation $\Delta T_{CL12}$ includes a posture deviation $\Delta R_{CL}$ and a translation deviation $\Delta t_{CL}$, and the pose deviation angle corresponding to $\Delta R_{CL}$ may be recorded as $\Delta\varphi_{CL}$. When the output data types or dimensions of the two sensors are different, for example, the single-axis IMU only outputs one-dimensional position information, while the lidar can output three-dimensional pose information, the deviation of the common output information is calculated, that is, only one-dimensional posture deviation is calculated, and the translation deviation is set to 0.

Relative pose includes a relative posture angle $\theta \in (-\pi, \pi)$, which determines the weight of the posture deviation and the translation deviation. Specifically, respective posture deviation weights and respective translation deviation weights of the two sensors at different moments may be calculated according to respective relative posture angles. Specifically, one-half sine value of the relative posture angle may be taken as the posture deviation weight, and the sum of the absolute value of one-half sine value of the relative posture angle and one-half cosine value of the relative posture angle may be taken as the translation deviation weight. Then, according to respective posture deviation weights and respective translation deviation weights of the two sensors at different moments, respective posture deviations and respective translation deviations of the two sensors at different moments are weighted and summed, and the extrinsic parameter change score result of the two sensors may be obtained. The extrinsic parameter change score result characterizes the difference in pose changes of the two sensors. That is to say, the larger the value of the extrinsic parameter change score result is, the greater the difference in pose changes of the two sensors is. Specifically, formula (9) may be used to calculate the extrinsic parameter change score result. $\theta \in (-\pi, \pi)$

$$\text{score} = \left(\sum_{i=0}^{n}\left(\left\|\Delta\varphi_i * \sin\frac{\theta_i}{2}\right\| + \|\Delta t_i\| * \left(\left\|\sin\frac{\theta_i}{2}\right\| + \cos\frac{\theta_i}{2}\right)\right)\right)/n \quad (9)$$

Wherein, score is the extrinsic parameter change score result, n is the number of relative poses, $\Delta\varphi_i$ is the posture deviation angle corresponding to the ith relative pose, $\theta_i$ is the relative posture angle corresponding to the ith relative pose, $\Delta t_i$ is the translation deviation corresponding to the ith relative pose, $\sin\frac{\theta_i}{2}$ is the posture deviation weight, $\left\|\sin\frac{\theta_i}{2}\right\| + \cos\frac{\theta_i}{2}$ is the translation deviation weight.

The extrinsic parameter change score result is compared with the preset threshold. If the extrinsic parameter change score result is greater than the preset threshold, it is considered that the extrinsic parameters of the two sensors have changed. The preset threshold value is set according to the actual requirements. The preset threshold value may be set to a larger value in case of a higher tolerance to extrinsic parameter changes, otherwise, it may be set to a smaller value.

Based on the above method embodiment, an embodiment of the present application provides an apparatus for detecting changes of extrinsic parameters. As shown in Fig. 12, the apparatus includes:

an acquisition module 1210, which is configured for acquiring respective pieces of pose data of any two sensors in a plurality of sensors at different moments;

an analysis module 1220, which is configured for determining a difference in pose changes of the two sensors according to the respective pieces of pose data;

a detection module 1230, which is configured for determining that the extrinsic parameters of the two sensors have changed if the difference in pose changes reaches a preset difference level.

Alternatively, the acquisition module 1210 may be specifically configured for acquiring respective pieces of sensor data collected by the two sensors in the plurality of sensors at different moments; converting the respective pieces of sensor data into pose data by using data conversion strategies respectively corresponding to types of the respective pieces of sensor data.

Alternatively, the apparatus further includes an interpolation module.

The interpolation module is configured for acquiring timestamps of respective pieces of pose data, taking timestamps of respective pieces of pose data of a first sensor in the two sensors as targets to interpolate respective pieces of pose data of a second sensor in the two sensors by using a preset interpolation algorithm, wherein an output frequency of the first sensor is smaller than that of the second sensor;

The analysis module 1220 is specifically configured for determining the difference in pose changes of the two sensors according to respective pieces of pose data of the first sensor and respective pieces of pose data of the second sensor after interpolation.

Alternatively, the apparatus may further include a coordinate conversion module.

The coordinate conversion module is configured for acquiring extrinsic parameters calibrated in advance for the two sensors; converting the respective pieces of pose data to a same coordinate system according to the extrinsic parameters.

The analysis module 1220 may be specifically configured for determining the difference in pose changes of the two sensors according to the respective pieces of pose data after coordinate system conversion.

Optionally, the apparatus may further include a scale unification module.

The scale unification module is configured for calculating respective relative poses of the two sensors at different moments according to the respective pieces of pose data after coordinate system conversion, wherein each relative pose comprises a translation amount of pose data at a current moment relative to pose data at a previous adjacent moment; for each sensor, summing respective translation amounts of the sensor at different moments to obtain a cumulative result of the translation amounts of the sensor; calculating a ratio between cumulative results of the translation amounts of the two sensors to obtain a scale factor; performing change scale unification on the pose data of the two sensors according to the scale factor, to obtain respective pieces of pose data after the change scale unification.

The analysis module 1220 may be specifically configured for determining the difference in pose changes of the two sensors according to the respective pieces of pose data after the change scale unification.

Alternatively, the analysis module 1220 may be specifically configured for calculating respective relative poses of the two sensors at different moments according to the respective pieces of pose data, wherein each relative pose comprises a relative posture angle of pose data at a current moment relative to pose data at a previous adjacent moment; calculating respective relative pose deviations of the two sensors at different moments according to the respective relative poses, wherein each relative pose deviation comprises a posture deviation and a translation deviation; calculating respective pose deviation weights and respective translation deviation weights of the two sensors at different moments according to respective relative posture angles; weighting and summing respective posture deviations and respective translation deviations of the two sensors at different moments according to the respective pose deviation weights and respective translation deviation weights of the two sensors at different moments to obtain an extrinsic parameter change score result for the two sensors, wherein the extrinsic parameter change score result characterizes the difference in pose changes of the two sensors.

The detection module 1230 may be specifically configured for determining that the extrinsic parameters of the two sensors have changed if the extrinsic parameter change score result is greater than a preset threshold.

Alternatively, the apparatus may further include an output module.

The output module is configured for outputting the extrinsic parameter change score result as a detection confidence.

Alternatively, the apparatus may further include a calibration module.

The calibration module is configured for re-performing extrinsic parameter calibration on the two sensors according to newly acquired pose data of the two sensors.

By applying the solutions provided in the embodiments of the present application, respective pieces of pose data of any two sensors in a plurality of sensors at different moments are acquired to determine the difference in pose changes of the two sensors and it is determined that the extrinsic parameters of the any two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the pose of the two sensors to a same coordinate system, in which there is no difference in the pose changes of the two sensors. However, if it is determined that there is a difference in the pose change between the two sensors, and the difference in the pose change reaches a preset difference level, it means that the pose changes of the two sensors are inconsistent, so that it can be determined that the extrinsic parameters of the two sensors have changed, and the detection of the changes of the extrinsic parameters of the sensors is realized.

The following embodiments regarding electronic device are not according to the invention and are present for illustration purposes only.

An embodiment of the present application provides an electronic device, as shown in Fig. 13, which includes a processor 1301 and a memory 1302, wherein the memory 1302 stores machine executable instructions that can be executed by the processor 1301 and are loaded and executed by the processor 1301 to perform the method for detecting changes of extrinsic parameters provided by the embodiment of the present application.

The above memory may include an RAM (Random Access Memory) or an NVM (Non-volatile Memory), such as at least one disk memory. Alternatively, the memory may also be at least one storage apparatus located far away from the aforementioned processor.

The processor may be a general-purpose processor, including a CPU (Central Processing Unit), an NP (Network Processor), etc.. It may also be a DSP (Digital Signal Processor), an ASIC (Application Specific Integrated Circuit), an FPGA (Field-Programmable Gate Array) or other programmable logic apparatuses, discrete gates or transistor logic apparatuses and discrete hardware components.

Data can be transmitted between the memory 1302 and the processor 1301 through wired connection or wireless connection, and electronic devices can communicate with other devices through wired communication interfaces or wireless communication interfaces. Fig. 13 is only an example of data transmission via a bus, and is not limited to the specific connection mode.

In this embodiment of the present application, by reading the machine executable instructions stored in the memory, and by loading and executing the machine executable instructions, the processor can perform the followings: acquiring respective pieces of pose data of any two sensors in a plurality of sensors at different moments, determining the difference in pose changes of the two sensors according to the respective pieces of pose data and determining that the extrinsic parameters of the any two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the pose of the two sensors to a same coordinate system in which there is no difference in the pose changes of the two sensors. However, if it is determined that there is a difference in the pose change between the two sensors, and the difference in the pose change reaches a preset difference level, it means that the pose changes of the two sensors are inconsistent, so that it may be determined that the extrinsic parameters of the two sensors have changed, and the detection of the changes of the extrinsic parameters of the sensors is realized.

In addition, an embodiment of the present application provides a machine-readable storage medium that stores machine executable instructions thereon which, when loaded and executed by a processor, cause the processor to perform the method for detecting changes of extrinsic parameters provided by the embodiment of the present application.

In this embodiment of the application, the machine-readable storage medium stores the machine-executable instructions which, when executed, perform the method for detecting changes of extrinsic parameters provided by the embodiment of the application at runtime, so as to perform the followings: acquiring respective pieces of pose data of any two sensors in a plurality of sensors at different moments, determining the difference in pose changes of the two sensors according to the respective pieces of pose data and determining that the extrinsic parameters of the any two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the pose of the two sensors to a same coordinate system in which there is no difference in the pose changes of the two sensors. However, if it is determined that there is a difference in the pose change between the two sensors, and the difference in the pose change reaches a preset difference level, it means that the pose changes of the two sensors are inconsistent, so that it can be determined that the extrinsic parameters of the two sensors have changed, and the detection of the changes of the extrinsic parameters of the sensors is realized.

In yet another embodiment provided by the present application, a computer program product containing instructions is also provided, which, when running on a computer, cause the computer to perform any one of the methods for detecting changes of extrinsic parameters in the above embodiments.

An embodiment of the present application provides a detection system, as shown in Fig. 14, which includes an electronic device 1401 and a plurality of sensors 1402;

wherein the plurality of sensors 1402 are configured for collecting data and sending the collected data to the electronic device 1401;

the electronic device 1401 is configured for acquiring respective pieces of pose data of any two sensors at different moments; determining the difference in pose changes of the two sensors according to the respective pieces of pose data; determining that the extrinsic parameters of the two sensors have changed if the difference in pose changes reaches a preset difference level.

According to the embodiment of the application, respective pieces of pose data of any two sensors in a plurality of sensors at different moments are acquired to determine the difference in pose changes of the two sensors, and it is determined that the extrinsic parameters of the any two sensors have changed if the difference in pose changes reaches a preset difference level. Constrained by extrinsic parameters, if the pose of one of the two sensors with calibrated extrinsic parameters changes at different moments, the pose of the other sensor should also change synchronously, and the pose changes of the two sensors should be consistent. This consistency is reflected in that coordinate transformation is performed through the calibrated extrinsic parameters to convert the pose of the two sensors to a same coordinate system in which there is no difference in the pose changes of the two sensors. However, if it is determined that there is a difference in the pose change between the two sensors, and the difference in the pose change reaches a preset difference level, it means that the pose changes of the two sensors are inconsistent, so that it can be determined that the extrinsic parameters of the two sensors have changed, and the detection of the changes of the extrinsic parameters of the sensors is realized.

In the above-mentioned embodiments, it may be implemented in whole or in part by software, hardware, firmware or any combination thereof. When implemented in software, it may be fully or partially implemented in the form of a computer program product. The computer program product includes one or more computer instructions. When the computer program instructions are loaded and executed on a computer, all or part of the processes or functions according to the embodiments of the present application are generated. The computer may be a general-purpose computer, a special-purpose computer, a computer network, or other programmable apparatuses. The computer instructions may be stored in a computer-readable storage medium or transmitted from one computer-readable storage medium to another. For example, the computer instructions may be transmitted from one website, computer, server or data center to another website, computer, computer or data center by wired (such as a coaxial cable, an optical fiber, a DSL(Digital Subscriber Line)) or wireless (such as infrared, wireless, microwave, etc.) means. The computer-readable storage medium may be any available medium that a computer can access or a data storage apparatus such as an integrated server or data center containing one or more available media. The available media may be magnetic media (such as a floppy disk, a hard disk, a magnetic tape), optical media (such as a DVD (Digital Versatile Disc)), or semiconductor media (such as a SSD (Solid State Disk)).

It should be noted that in this text, relational terms such as first and second are only used to distinguish one entity or operation from another entity or operation, and do not necessarily require or imply any such actual relationship or sequence between these entities or operations. Moreover, the terms "include", "comprise" or any other variation thereof are intended to cover non-exclusive inclusion, so that a process, method, article or device that includes a series of

**EP 4 155 673 B1**

elements not only includes those elements, but also includes other elements not explicitly listed, or also includes elements inherent to such process, method, article or device. Without further restrictions, an element defined by the statement "including a ..." does not exclude the existence of another identical element in the process, method, article or device that includes the said element.

All the embodiments in this specification are described in related ways, and the same and similar parts among each embodiment may be referred to each other, and the differences between the various embodiments may be referred to each other. Especially, for the embodiments of apparatuses, electronic devices, machine-readable storage media, computer program products, and detection systems, since they are basically similar to the method embodiments, the description thereof is relatively simple, and the relevant content can be found in the partial descriptions of the method embodiments.

The above are only the preferred embodiments of the present application, and are not intended to limit the present application..

**Claims**

1.   A method for detecting changes of extrinsic parameters, wherein the method comprises:

acquiring (S101) respective pieces of pose data of any two sensors in a plurality of sensors at different moments;
determining (S102) a difference in pose changes between a pose change of a first sensor in the any two sensors and a pose change of a second sensor in the any two sensors according to the respective pieces of pose data;
determining (S103) that the extrinsic parameters of the first sensor and the second sensor that are calibrated in advance have changed if the difference in pose changes reaches a preset difference level,
wherein before a step of determining (S102) a difference in pose changes between a pose change of a first sensor in the any two sensors and a pose change of a second sensor in the any two sensors according to the respective pieces of pose data, the method further comprises:

acquiring (S301) timestamps of respective pieces of pose data;
taking (S302) timestamps of respective pieces of pose data of the first sensor in the any two sensors as targets to interpolate respective pieces of pose data of the second sensor in the any two sensors by using a preset interpolation algorithm, wherein an output frequency of the first sensor is smaller than that of the second sensor;
and wherein
the step of determining (S102) a difference in pose changes between a pose change of a first sensor in the any two sensors and a pose change of a second sensor in the any two sensors according to the respective pieces of pose data comprises:
determining (S303) the difference in pose changes according to respective pieces of pose data of the first sensor and respective pieces of pose data of the second sensor after interpolation.

2.   The method according to claim 1, wherein a step of acquiring (S101) respective pieces of pose data of any two sensors in a plurality of sensors at different moments comprises:

acquiring respective pieces of sensor data collected by the any two sensors in the plurality of sensors at different moments;
converting the respective pieces of sensor data into pose data by using data conversion strategies respectively corresponding to types of the respective pieces of sensor data.

3.   The method according to claim 1, wherein before a step of determining (S102) a difference in pose changes between a pose change of a first sensor in the any two sensors and a pose change of a second sensor in the any two sensors according to the respective pieces of pose data, the method further comprises:

acquiring (S401) extrinsic parameters calibrated in advance for the any two sensors;
converting (S402) the respective pieces of pose data to a same coordinate system according to the extrinsic parameters;
the step of determining (S102) a difference in pose changes between a pose change of a first sensor in the any two sensors and a pose change of a second sensor in the any two sensors according to the respective pieces of pose data comprises:
determining (S403) the difference in pose changes according to the respective pieces of pose data after

15

coordinate system conversion.

4. The method according to claim 1, wherein after a step of converting (S402) the respective pieces of pose data to a same coordinate system according to the extrinsic parameters, the method further comprises:

calculating (S503) respective relative poses of the any two sensors at different moments according to the respective pieces of pose data after coordinate system conversion, wherein each relative pose comprises a translation amount of pose data at a current moment relative to pose data at a previous adjacent moment;

for each sensor, summing (S504) respective translation amounts of the sensor at different moments to obtain a cumulative result of the translation amounts of the sensor;

calculating (S505) a ratio between cumulative results of the translation amounts of the any two sensors to obtain a scale factor;

performing (S506) change scale unification on the pose data of the any two sensors according to the scale factor, to obtain respective pieces of pose data after the change scale unification;

the step of determining (S102) a difference in pose changes between a pose change of a first sensor in the any two sensors and a pose change of a second sensor in the any two sensors according to the respective pieces of pose data comprises:

determining (S507) the difference in pose changes according to the respective pieces of pose data after the change scale unification.

5. The method according to claim 1, wherein a step of determining (S102) a difference in pose changes between a pose change of a first sensor in the any two sensors and a pose change of a second sensor in the any two sensors according to the respective pieces of pose data comprises:

calculating respective relative poses of the any two sensors at different moments according to the respective pieces of pose data, wherein each relative pose comprises a relative posture angle of pose data at a current moment relative to pose data at a previous adjacent moment;

calculating respective relative pose deviations of the any two sensors at different moments according to the respective relative poses, wherein each relative pose deviation comprises a posture deviation and a translation deviation;

calculating respective pose deviation weights and respective translation deviation weights of the any two sensors at different moments according to respective relative posture angles;

weighting and summing respective posture deviations and respective translation deviations of the any two sensors at different moments according to the respective pose deviation weights and respective translation deviation weights of the any two sensors at different moments to obtain an extrinsic parameter change score result for the any two sensors, wherein the extrinsic parameter change score result characterizes the difference in pose changes;

a step of determining (S103) that the extrinsic parameters of the first sensor and the second sensor that are calibrated in advance have changed if the difference in pose changes reaches a preset difference level comprises:

determining that the extrinsic parameters of the first sensor and the second sensor that are calibrated in advance have changed if the extrinsic parameter change score result is greater than a preset threshold;

preferably, after the step of determining that the extrinsic parameters of the first sensor and the second sensor that are calibrated in advance have changed if the extrinsic parameter change score result is greater than a preset threshold, the method further comprises:

outputting the extrinsic parameter change score result as a detection confidence.

6. The method according to claim 1, wherein after a step of determining (S103) that the extrinsic parameters of the first sensor and the second sensor that are calibrated in advance have changed if the difference in pose changes reaches a preset difference level, the method further comprises:

re-performing (S604) extrinsic parameter calibration on the any two sensors according to newly acquired pose data of the any two sensors.

7. An apparatus for detecting changes of extrinsic parameters, wherein the apparatus comprises:

an acquisition module (1210), which is configured for acquiring respective pieces of pose data of any two sensors in a plurality of sensors at different moments;

an analysis module (1220), which is configured for determining a difference in pose changes between a pose change of a first sensor in the any two sensors and a pose change of a second sensor in the any two sensors according to the respective pieces of pose data;
a detection module (1230), which is configured for determining that the extrinsic parameters of the first sensor and the second sensor that are calibrated in advance have changed if the difference in pose changes reaches a preset difference level,
wherein the apparatus further comprises an interpolation module;
the interpolation module is configured for acquiring timestamps of respective pieces of pose data, taking timestamps of respective pieces of pose data of the first sensor in the any two sensors as targets to interpolate respective pieces of pose data of the second sensor in the any two sensors by using a preset interpolation algorithm, wherein an output frequency of the first sensor is smaller than that of the second sensor;
the analysis module (1220) is specifically configured for determining the difference in pose changes according to respective pieces of pose data of the first sensor and respective pieces of pose data of the second sensor after interpolation.

8. The apparatus according to claim 7, wherein the acquisition module (1210) is specifically configured for: acquiring respective pieces of sensor data collected by the any two sensors in the plurality of sensors at different moments; converting the respective pieces of sensor data into pose data by using data conversion strategies respectively corresponding to types of the respective pieces of sensor data.

9. The apparatus according to claim 7, wherein the apparatus further comprises a coordinate conversion module;

the coordinate conversion module is configured for acquiring extrinsic parameters calibrated in advance for the any two sensors; converting the respective pieces of pose data to a same coordinate system according to the extrinsic parameters;
the analysis module (1220) is specifically configured for determining the difference in pose changes according to the respective pieces of pose data after coordinate system conversion;
preferably, the apparatus further comprises a scale unification module;
the scale unification module is configured for calculating respective relative poses of the any two sensors at different moments according to the respective pieces of pose data after coordinate system conversion, wherein each relative pose comprises a translation amount of pose data at a current moment relative to pose data at a previous adjacent moment; for each sensor, summing respective translation amounts of the sensor at different moments to obtain a cumulative result of the translation amounts of the sensor; calculating a ratio between cumulative results of the translation amounts of the any two sensors to obtain a scale factor; performing change scale unification on the pose data of the any two sensors according to the scale factor, to obtain respective pieces of pose data after the change scale unification;
the analysis module (1220) is specifically configured for determining the difference in pose changes according to the respective pieces of pose data after the change scale unification.

10. The apparatus according to claim 7, wherein the analysis module (1220) is specifically configured for calculating respective relative poses of the any two sensors at different moments according to the respective pieces of pose data, wherein each relative pose comprises a relative posture angle of pose data at a current moment relative to pose data at a previous adjacent moment; calculating respective relative pose deviations of the any two sensors at different moments according to the respective relative poses, wherein each relative pose deviation comprises a posture deviation and a translation deviation; calculating respective pose deviation weights and respective translation deviation weights of the any two sensors at different moments according to respective relative posture angles; weighting and summing respective posture deviations and respective translation deviations of the any two sensors at different moments according to the respective pose deviation weights and respective translation deviation weights of the any two sensors at different moments to obtain an extrinsic parameter change score result for the any two sensors, wherein the extrinsic parameter change score result characterizes the difference in pose changes;

the detection module (1230) is specifically configured for determining that the extrinsic parameters of the first sensor and the second sensor that are calibrated in advance have changed if the extrinsic parameter change score result is greater than a preset threshold;
preferably, the apparatus further comprises an output module;
the output module is configured for outputting the extrinsic parameter change score result as a detection confidence.

11. The apparatus according to claim 7, wherein the apparatus further comprises a calibration module;
the calibration module is configured for re-performing extrinsic parameter calibration on the any two sensors according to newly acquired pose data of the any two sensors.

12. A detection system, comprising an apparatus according to claim 7 and a plurality of sensors (1402);
wherein the plurality of sensors (1402) are configured for collecting data and sending collected data to the apparatus.

**Patentansprüche**

1. Verfahren zum Erkennen von Änderungen extrinsischer Parameter, wobei das Verfahren Folgendes umfasst:

Erfassen (S101) von jeweiligen Posendaten beliebiger zwei Sensoren aus einer Vielzahl von Sensoren zu unterschiedlichen Zeitpunkten;
Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten;
Ermitteln (S103), dass sich die extrinsischen Parameter des ersten Sensors und des zweiten Sensors, die im Voraus kalibriert wurden, geändert haben, wenn die Differenz der Posenänderungen einen voreingestellten Differenzwert erreicht,
wobei vor einem Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten das Verfahren ferner Folgendes umfasst:

Erfassen (S301) von Zeitstempeln der jeweiligen Posendaten;
Verwenden (S302) von Zeitstempeln der jeweiligen Posendaten des ersten Sensors der beliebigen zwei Sensoren als Zielwerte, um die jeweiligen Posendaten des zweiten Sensors der beliebigen zwei Sensoren mithilfe eines voreingestellten Interpolationsalgorithmus zu interpolieren, wobei eine Ausgabefrequenz des ersten Sensors kleiner ist als die des zweiten Sensors;
und wobei
der Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten umfasst:
Ermitteln (S303) der Differenz der Posenänderungen gemäß den jeweiligen Posendaten des ersten Sensors und den jeweiligen Posendaten des zweiten Sensors nach der Interpolation.

2. Verfahren nach Anspruch 1, wobei ein Schritt des Erfassens (S101) von jeweiligen Posendaten beliebiger zwei Sensoren aus einer Vielzahl von Sensoren zu unterschiedlichen Zeitpunkten Folgendes umfasst:

Erfassen der jeweiligen Sensordaten, die von den beiden Sensoren aus der Vielzahl von Sensoren zu unterschiedlichen Zeitpunkten erfasst wurden;
Umwandeln der jeweiligen Sensordaten in Posendaten unter Verwendung von Datenkonvertierungsstrategien, die jeweils den Typen der jeweiligen Sensordaten entsprechen.

3. Verfahren nach Anspruch 1, wobei vor einem Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten das Verfahren ferner Folgendes umfasst:

Erfassen (S401) von im Voraus kalibrierten extrinsischen Parametern für die beliebigen zwei Sensoren;
Umwandeln (S402) der jeweiligen Posendaten in ein gemeinsames Koordinatensystem gemäß den extrinsischen Parametern;
der Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten umfasst:
Ermitteln (S403) der Differenz der Posenänderungen gemäß den jeweiligen Posendaten nach der Koordinatensystemumwandlung.

4. Verfahren nach Anspruch 1, wobei nach einem Schritt des Umwandelns (S402) der jeweiligen Posendaten in ein gemeinsames Koordinatensystem gemäß den extrinsischen Parametern das Verfahren ferner Folgendes umfasst:

Berechnen (S503) der jeweiligen relativen Posen der beliebigen zwei Sensoren zu verschiedenen Zeitpunkten gemäß den jeweiligen Posendaten nach der Koordinatensystemumwandlung, wobei jede relative Pose einen Translationsbetrag der Posendaten zum aktuellen Zeitpunkt relativ zu den Posendaten zu einem vorhergehenden benachbarten Zeitpunkt umfasst;

für jeden Sensor, Summieren (S504) der jeweiligen Translationsbeträge des Sensors zu verschiedenen Zeitpunkten, um ein kumulatives Ergebnis der Translationsbeträge des Sensors zu erhalten;

Berechnen (S505) eines Verhältnisses der kumulativen Ergebnisse der Translationsbeträge der beliebigen zwei Sensoren, um einen Skalierungsfaktor zu erhalten;

Durchführen (S506) einer Änderungsskalierungsvereinheitlichung der Posendaten der beliebigen zwei Sensoren gemäß dem Skalierungsfaktor, um die jeweiligen Posendaten nach der Änderungsskalierungsvereinheitlichung zu erhalten;

der Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten umfasst:

Ermitteln (S507) der Differenz der Posenänderungen gemäß den jeweiligen Posendaten nach der Änderungsskalierungsvereinheitlichung.

5. Verfahren nach Anspruch 1, wobei ein Schritt zum Ermitteln (S102) einer Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten Folgendes umfasst:

Berechnen der jeweiligen relativen Posen der beliebigen zwei Sensoren zu verschiedenen Zeitpunkten gemäß den jeweiligen Posendaten, wobei jede relative Pose einen relativen Haltungswinkel der Posendaten zum aktuellen Zeitpunkt relativ zu den Posendaten zu einem vorhergehenden benachbarten Zeitpunkt umfasst;

Berechnen der jeweiligen relativen Posenabweichungen der beliebigen zwei Sensoren zu verschiedenen Zeitpunkten gemäß den jeweiligen relativen Posen, wobei jede relative Posenabweichung eine Haltungsabweichung und eine Translationsabweichung umfasst;

Berechnen der jeweiligen Posenabweichungsgewichte und der jeweiligen Translationsabweichungsgewichte der beliebigen zwei Sensoren zu verschiedenen Zeitpunkten gemäß den jeweiligen relativen Haltungswinkeln;

Gewichten und Summieren der jeweiligen Haltungsabweichungen und der jeweiligen Translationsabweichungen der beliebigen zwei Sensoren zu verschiedenen Zeitpunkten gemäß den jeweiligen Posenabweichungsgewichten und den jeweiligen Translationsabweichungsgewichten der beliebigen zwei Sensoren zu verschiedenen Zeitpunkten, um ein Bewertungsergebnis der Änderung extrinsischer Parameter für die beliebigen zwei Sensoren zu erhalten, wobei das Bewertungsergebnis der Änderung extrinsischer Parameter die Differenz der Posenänderungen charakterisiert;

ein Schritt zum Ermitteln (S103), dass sich die extrinsischen Parameter des ersten und des zweiten Sensors, die im Voraus kalibriert wurden, geändert haben, wenn die Differenz der Posenänderungen einen voreingestellten Differenzwert erreicht, umfasst:

Ermitteln, dass sich die extrinsischen Parameter des ersten und des zweiten Sensors, die im Voraus kalibriert wurden, geändert haben, wenn das Bewertungsergebnis der Änderung extrinsischer Parameter einen voreingestellten Schwellenwert überschreitet;

vorzugsweise umfasst das Verfahren, nachdem ermittelt wurde, dass sich die extrinsischen Parameter des ersten und des zweiten Sensors, die im Voraus kalibriert wurden, geändert haben, wenn das Bewertungsergebnis der Änderung extrinsischer Parameter einen voreingestellten Schwellenwert überschreitet, ferner Folgendes:

Ausgeben des Bewertungsergebnisses der Änderung extrinsischer Parameter als Erkennungssicherheit.

6. Verfahren nach Anspruch 1, wobei nach einem Schritt zum Ermitteln (S103), dass sich die extrinsischen Parameter des ersten und des zweiten Sensors, die im Voraus kalibriert wurden, geändert haben, wenn die Differenz der Posenänderungen einen voreingestellten Differenzwert erreicht, das Verfahren ferner Folgendes umfasst:

Erneutes Durchführen (S604) der Kalibrierung extrinsischer Parameter an den beiden Sensoren gemäß neu erfassten Posendaten der beliebigen zwei Sensoren.

7. Einrichtung zur Erkennung von Änderungen extrinsischer Parameter, wobei die Einrichtung Folgendes umfasst:

ein Erfassungsmodul (1210), das dazu konfiguriert ist, jeweilige Posendaten beliebiger zwei Sensoren aus einer Vielzahl von Sensoren zu unterschiedlichen Zeitpunkten zu erfassen;

ein Analysemodul (1220), das dazu konfiguriert ist, eine Differenz der Posenänderungen zwischen einer Posenänderung eines ersten Sensors der beliebigen zwei Sensoren und einer Posenänderung eines zweiten Sensors der beliebigen zwei Sensoren gemäß den jeweiligen Posendaten zu ermitteln;

ein Detektionsmodul (1230), das dazu konfiguriert ist, zu ermitteln, dass sich die extrinsischen Parameter des ersten und des zweiten Sensors, die im Voraus kalibriert wurden, geändert haben, wenn die Differenz der Posenänderungen einen voreingestellten Differenzwert erreicht,

wobei die Einrichtung ferner ein Interpolationsmodul umfasst;

das Interpolationsmodul ist dazu konfiguriert, Zeitstempel der jeweiligen Posendaten zu erfassen, wobei die Zeitstempel der jeweiligen Posendaten des ersten Sensors der beliebigen zwei Sensoren als Zielwerte verwendet werden, um die jeweiligen Posendaten des zweiten Sensors der beliebigen zwei Sensoren mithilfe eines voreingestellten Interpolationsalgorithmus zu interpolieren, wobei eine Ausgabefrequenz des ersten Sensors kleiner ist als die des zweiten Sensors;

das Analysemodul (1220) ist speziell dazu konfiguriert, die Differenz der Posenänderungen gemäß den jeweiligen Posendaten des ersten Sensors und den jeweiligen Posendaten des zweiten Sensors nach der Interpolation zu ermitteln.

8. Einrichtung nach Anspruch 7, wobei das Erfassungsmodul (1210) speziell für Folgendes konfiguriert ist: Erfassen der jeweiligen Sensordaten, die von den beiden Sensoren aus der Vielzahl von Sensoren zu unterschiedlichen Zeitpunkten erfasst wurden; Umwandeln der jeweiligen Sensordaten in Posendaten unter Verwendung von Datenkonvertierungsstrategien, die jeweils den Typen der jeweiligen Sensordaten entsprechen.

9. Einrichtung nach Anspruch 7, wobei die Einrichtung ferner ein Koordinatenumwandlungsmodul umfasst;

das Koordinatenumwandlungsmodul ist dazu konfiguriert, im Voraus kalibrierte extrinsische Parameter für die beliebigen zwei Sensoren zu erfassen; die jeweiligen Posendaten gemäß den extrinsischen Parametern in ein gemeinsames Koordinatensystem umzuwandeln;

das Analysemodul (1220) ist speziell dazu konfiguriert, die Differenz der Posenänderungen gemäß den jeweiligen Posendaten nach der Koordinatensystemumwandlung zu ermitteln;

vorzugsweise umfasst die Einrichtung ferner ein Skalierungsvereinheitlichungsmodul;

das Skalierungsvereinheitlichungsmodul ist dazu konfiguriert, die jeweiligen relativen Posen der beliebigen zwei Sensoren zu verschiedenen Zeitpunkten gemäß den jeweiligen Posendaten nach der Koordinatensystemumwandlung zu berechnen, wobei jede relative Pose einen Translationsbetrag der Posendaten zum aktuellen Zeitpunkt relativ zu den Posendaten zu einem vorhergehenden benachbarten Zeitpunkt umfasst; für jeden Sensor die jeweiligen Translationsbeträge des Sensors zu verschiedenen Zeitpunkten zu summieren, um ein kumulatives Ergebnis der Translationsbeträge des Sensors zu erhalten; ein Verhältnis zwischen den kumulativen Ergebnissen der Translationsbeträge der beliebigen zwei Sensoren zu berechnen, um einen Skalierungsfaktor zu erhalten; eine Änderungsskalierungsvereinheitlichung der Posendaten der beliebigen zwei Sensoren gemäß dem Skalierungsfaktor durchzuführen, um die jeweiligen Posendaten nach der Änderungsskalierungsvereinheitlichung zu erhalten;

das Analysemodul (1220) ist speziell dazu konfiguriert, die Differenz der Posenänderungen gemäß den jeweiligen Posendaten nach der Vereinheitlichung der Änderungsskalierungsvereinheitlichung zu ermitteln.

10. Einrichtung nach Anspruch 7, wobei das Analysemodul (1220) speziell dazu konfiguriert ist, die jeweiligen relativen Posen der beliebigen zwei Sensoren zu verschiedenen Zeitpunkten gemäß den jeweiligen Posendaten zu berechnen, wobei jede relative Pose einen relativen Haltungswinkel der Posendaten zum aktuellen Zeitpunkt relativ zu den Posendaten zu einem vorhergehenden benachbarten Zeitpunkt umfasst; die jeweiligen relativen Posenabweichungen der beliebigen zwei Sensoren zu verschiedenen Zeitpunkten gemäß den jeweiligen relativen Posen zu berechnen, wobei jede relative Posenabweichung eine Haltungsabweichung und eine Translationsabweichung umfasst; die jeweiligen Posenabweichungsgewichte und die jeweiligen Translationsabweichungsgewichte der beliebigen zwei Sensoren zu verschiedenen Zeitpunkten gemäß den jeweiligen relativen Haltungswinkeln zu berechnen; die jeweiligen Haltungsabweichungen und die jeweiligen Translationsabweichungen der beliebigen zwei Sensoren zu verschiedenen Zeitpunkten gemäß den jeweiligen Posenabweichungsgewichten und den jeweiligen Translationsabweichungsgewichten der beliebigen zwei Sensoren zu verschiedenen Zeitpunkten zu gewichten und zu summieren, um ein Bewertungsergebnis der Änderung extrinsischer Parameter für die beliebigen zwei Sensoren zu erhalten, wobei das Bewertungsergebnis der Änderung extrinsischer Parameter die Differenz der Posenänderungen charakterisiert;

das Detektionsmodul (1230) ist speziell dazu konfiguriert, zu ermitteln, dass sich die extrinsischen Parameter des ersten und des zweiten Sensors, die im Voraus kalibriert wurden, geändert haben, wenn das Bewertungsergebnis der Änderung extrinsischer Parameter einen voreingestellten Schwellenwert überschreitet;
vorzugsweise umfasst die Einrichtung ferner ein Ausgabemodul;
das Ausgabemodul ist dazu konfiguriert, das Bewertungsergebnis der Änderung extrinsischer Parameter als Erkennungssicherheit auszugeben.

11. Einrichtung nach Anspruch 7, wobei die Einrichtung ferner ein Kalibrierungsmodul umfasst;
das Kalibrierungsmodul ist dazu konfiguriert, die Kalibrierung extrinsischer Parameter an den beliebigen zwei Sensoren gemäß neu erfassten Posendaten der beliebigen zwei Sensoren erneut durchzuführen.

12. Detektionssystem, umfassend eine Einrichtung nach Anspruch 7 und eine Vielzahl von Sensoren (1402);
wobei die Vielzahl der Sensoren (1402) dazu konfiguriert ist, Daten zu erfassen und die erfassten Daten an die Einrichtung zu senden.

## Revendications

1. Procédé de détection de changements de paramètres extrinsèques, dans lequel le procédé comprend :

l'acquisition (S101) de morceaux de données de pose respectifs de deux capteurs quelconques dans une pluralité de capteurs à différents moments ;
la détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs ;
la détermination (S103) que les paramètres extrinsèques du premier capteur et du second capteur qui sont calibrés à l'avance ont changé si la différence dans des changements de pose atteint un niveau de différence prédéfini,
dans lequel avant une étape de détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs, le procédé comprend en outre :

l'acquisition (S301) d'horodatages de morceaux de données de pose respectifs ;
la prise (S302) d'horodatages de morceaux de données de pose respectifs du premier capteur dans les deux capteurs quelconques en tant que cibles pour interpoler des morceaux de données de pose respectifs du second capteur dans les deux capteurs quelconques en utilisant un algorithme d'interpolation prédéfini, dans lequel une fréquence d'émission du premier capteur est inférieure à celle du second capteur ;
et dans lequel
l'étape de détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs comprend :
la détermination (S303) de la différence dans des changements de pose selon des morceaux de données de pose respectifs du premier capteur et des morceaux de données de pose respectifs du second capteur après interpolation.

2. Procédé selon la revendication 1, dans lequel une étape d'acquisition (S101) de morceaux de données de pose respectifs de deux capteurs quelconques dans une pluralité de capteurs à différents moments comprend :

l'acquisition de morceaux de données de capteur respectifs collectées par les deux capteurs quelconques dans la pluralité de capteurs à différents moments ;
la conversion des morceaux de données de capteur respectifs en données de pose en utilisant des stratégies de conversion de données correspondant respectivement à des types des morceaux de données de capteur respectifs.

3. Procédé selon la revendication 1, dans lequel avant une étape de détermination (5102) d'une différence dans des changements de pose entre un changement de pose d'un premier capteur dans les deux capteurs quelconques et un changement de pose d'un second capteur dans les deux capteurs quelconques selon les morceaux de données de pose respectifs, le procédé comprend en outre :

l'acquisition (S401) de paramètres extrinsèques calibrés à l'avance pour les deux capteurs quelconques ;
la conversion (S402) des morceaux de données de pose respectifs vers un même système de coordonnées selon les paramètres extrinsèques ;
l'étape de détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs comprend :
la détermination (S403) de la différence dans des changements de pose selon les morceaux de données de pose respectifs après conversion de système de coordonnées.

4. Procédé selon la revendication 1, dans lequel, après une étape de conversion (S402) des morceaux de données de pose respectifs en un même système de coordonnées selon les paramètres extrinsèques, le procédé comprend en outre :

le calcul (S503) de poses relatives respectives des deux capteurs quelconques à différents moments selon les morceaux de données de pose respectifs après conversion de système de coordonnées, dans lequel chaque pose relative comprend une quantité de translation de données de pose à un moment actuel par rapport à des données de pose à un moment adjacent précédent ;
pour chaque capteur, l'addition (S504) de quantités de translation respectives du capteur à différents moments pour obtenir un résultat cumulé des quantités de translation du capteur ;
le calcul (S505) d'un rapport entre des résultats cumulés des quantités de translation des deux capteurs quelconques pour obtenir un facteur d'échelle ;
la réalisation (S506) d'une unification d'échelle de changement sur les données de pose des deux capteurs quelconques selon le facteur d'échelle, pour obtenir des morceaux de données de pose respectifs après l'unification d'échelle de changement ;
l'étape de détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs comprend :
la détermination (S507) de la différence dans des changements de pose selon les morceaux de données de pose respectifs après l'unification d'échelle de changement.

5. Procédé selon la revendication 1, dans lequel une étape de détermination (S102) d'une différence dans des changements de pose entre un changement de pose d'un premier capteur dans les deux capteurs quelconques et un changement de pose d'un second capteur dans les deux capteurs quelconques selon les morceaux de données de pose respectifs comprend :

le calcul de poses relatives respectives des deux capteurs quelconques à différents moments selon les morceaux de données de pose respectifs, dans lequel chaque pose relative comprend un angle de posture relative des données de pose à un moment actuel par rapport à des données de pose à un moment adjacent précédent ;
le calcul d'écarts de pose relative respectifs des deux capteurs quelconques à différents moments selon les poses relatives respectives, dans lequel chaque écart de pose relative comprend un écart de posture et un écart de translation ;
le calcul de poids d'écart de pose respectifs et de poids d'écart de translation respectifs des deux capteurs quelconques à différents moments selon des angles de posture relative respectifs ;
la pondération et l'addition d'écarts de posture respectifs et d'écarts de translation respectifs des deux capteurs quelconques à différents moments selon les poids d'écart de pose respectifs et les poids d'écart de translation respectifs des deux capteurs quelconques à différents moments pour obtenir un résultat de score de changement de paramètre extrinsèque pour les deux capteurs quelconques, dans lequel le résultat de score de changement de paramètre extrinsèque caractérise la différence dans des changements de pose ;
une étape de détermination (S103) que les paramètres extrinsèques du premier capteur et du second capteur qui sont calibrés à l'avance ont changé si la différence dans des changements de pose atteint un niveau de différence prédéfini comprend :

la détermination que les paramètres extrinsèques du premier capteur et du second capteur qui sont calibrés à l'avance ont changé si le résultat de score de changement de paramètre extrinsèque est supérieur à un seuil prédéfini ;
de préférence, après l'étape de détermination que les paramètres extrinsèques du premier capteur et du second capteur qui sont calibrés à l'avance ont changé si le résultat de score de changement de paramètre extrinsèque est supérieur à un seuil prédéfini, le procédé comprend en outre :

l'émission du résultat de score de changement de paramètre extrinsèque comme une confiance de détection.

6. Procédé selon la revendication 1, dans lequel après une étape de détermination (S103) que les paramètres extrinsèques du premier capteur et du second capteur qui sont calibrés à l'avance ont changé si la différence dans des changements de pose atteint un niveau de différence prédéfini, le procédé comprenant en outre :

la réalisation répétée (S604) du calibrage de paramètre extrinsèque sur les deux capteurs quelconques selon des données de pose nouvellement acquises des deux capteurs quelconques.

7. Appareil de détection de changements de paramètres extrinsèques, dans lequel l'appareil comprend :

un module d'acquisition (1210), qui est configuré pour acquérir des morceaux de données de pose respectifs de deux capteurs quelconques dans une pluralité de capteurs à différents moments ;

un module d'analyse (1220), qui est configuré pour la détermination d'une différence dans des changements de pose entre un changement de pose d'un premier capteur dans les deux capteurs quelconques et un changement de pose d'un second capteur dans les deux capteurs quelconques selon les morceaux de données de pose respectifs ;

un module de détection (1230), qui est configuré pour la détermination que les paramètres extrinsèques du premier capteur et du second capteur qui sont calibrés à l'avance ont changé si la différence dans des changements de pose atteint un niveau de différence prédéfini,

dans lequel l'appareil comprend en outre un module d'interpolation ;

le module d'interpolation est configuré pour l'acquisition d'horodatages de morceaux de données de pose respectifs, en prenant comme cibles les horodatages des différentes parties des données de pose du premier capteur parmi les deux capteurs, afin d'interpoler les différentes parties des données de pose du second capteur parmi les deux capteurs, en utilisant un algorithme d'interpolation prédéfini, dans lequel la fréquence de sortie du premier capteur est inférieure à celle du second capteur ;

le module d'analyse (1220) est spécifiquement configuré pour la détermination de la différence dans des changements de pose selon des morceaux de données de pose respectifs du premier capteur et des morceaux de données de pose respectifs du second capteur après interpolation.

8. Appareil selon la revendication 7, dans lequel le module d'acquisition (1210) est spécifiquement configuré pour : l'acquisition de morceaux de données de capteur respectifs collectées par les deux capteurs quelconques dans la pluralité de capteurs à différents moments ; la conversion les morceaux de données de capteur respectifs en données de pose en utilisant des stratégies de conversion de données correspondant respectivement à des types des morceaux de données de capteur respectifs.

9. Appareil selon la revendication 7, dans lequel l'appareil comprend en outre un module de conversion de coordonnées ;

le module de conversion de coordonnées est configuré pour l'acquisition des paramètres extrinsèques calibrés à l'avance pour les deux capteurs quelconques ; la conversion des morceaux de données de pose respectifs en un même système de coordonnées selon les paramètres extrinsèques ;

le module d'analyse (1220) est spécifiquement configuré pour la détermination de la différence dans des changements de pose selon les morceaux de données de pose respectifs après conversion de système de coordonnées ;

de préférence, l'appareil comprend en outre un module d'unification d'échelle ;

le module d'unification d'échelle est configuré pour le calcul de poses relatives respectives des deux capteurs à différents moments selon les morceaux de données de pose respectifs après conversion de système de coordonnées, dans lequel chaque pose relative comprend une quantité de translation de données de pose à un moment actuel par rapport à des données de pose à un moment adjacent précédent, pour chaque capteur, l'addition de quantités de translation respectives du capteur à différents moments pour obtenir un résultat cumulé des quantités de translation du capteur, le calcul d'un rapport entre des résultats cumulés des quantités de translation des deux capteurs quelconques pour obtenir un facteur d'échelle ; la réalisation d'une unification d'échelle de changement sur les données de pose des deux capteurs quelconques selon le facteur d'échelle, pour obtenir des morceaux de données de pose respectifs après l'unification d'échelle de changement ;

le module d'analyse (1220) est spécifiquement configuré pour la détermination de la différence dans des changements de pose selon les morceaux de données de pose respectifs après l'unification d'échelle de changement.

10. Appareil selon la revendication 7, dans lequel le module d'analyse (1220) est spécifiquement configuré pour calculer des poses relatives respectives des deux capteurs quelconques à différents moments selon les morceaux de données de pose respectifs, dans lequel chaque pose relative comprend un angle de posture relative de données de pose à un moment actuel par rapport à des données de pose à un moment adjacent précédent ; le calcul d'écarts de pose relative respectifs des deux capteurs quelconques à différents moments selon les poses relatives respectives, dans lequel chaque écart de pose relative comprend un écart de posture et un écart de translation ; le calcul de poids d'écart de pose respectifs et de poids d'écart de translation respectifs des deux capteurs quelconques à différents moments selon les angles de posture relative respectifs ; la pondération et l'addition d'écarts de posture respectifs et d'écarts de translation respectifs des deux capteurs quelconques à différents moments selon les poids d'écart de pose respectifs et les poids d'écart de translation respectifs des deux capteurs quelconques à différents moments pour obtenir un résultat de score de changement de paramètre extrinsèque pour les deux capteurs quelconques, dans lequel le résultat de score de changement de paramètre extrinsèque caractérise la différence de changements de pose ;

le module de détection (1230) est spécifiquement configuré pour la détermination que les paramètres extrinsèques du premier capteur et du second capteur qui sont calibrés à l'avance ont changé si le résultat de score de changement de paramètre extrinsèque est supérieur à un seuil prédéfini ;
de préférence, l'appareil comprend en outre un module d'émission ;
le module d'émission est configuré pour l'émission du résultat de score de changement de paramètre extrinsèque comme une confiance de détection.

11. Appareil selon la revendication 7, dans lequel l'appareil comprend en outre un module de calibrage ;
le module de calibrage est configuré pour la réalisation répétée du calibrage de paramètre extrinsèque sur les deux capteurs quelconques selon des données de pose nouvellement acquises des deux capteurs quelconques.

12. Système de détection, comprenant un appareil selon la revendication 7 et une pluralité de capteurs (1402) ;
dans lequel la pluralité de capteurs (1402) est configurée pour collecter des données et envoyer des données collectées à l'appareil.

| acquiring respective pieces of pose data of any two sensors in a plurality of sensors at different moments | S101 |

| determining a difference in pose changes of the two sensors according to the respective pieces of pose data | S102 |

| determining that the extrinsic parameters of the two sensors have changed if the difference in pose changes reaches a preset difference level | S103 |

Fig. 1

sensor data → selecting a data conversion strategy according to the type of sensor data →

- integrated navigation
- visual mileage calculation
- point cloud mileage calculation
- attitude and heading estimation

→ pose data

Fig. 2

acquiring respective pieces of pose data of any two sensors in a plurality of sensors at different moments, and timestamps of respective pieces of pose data ⟍S301

taking the timestamps of respective pieces of pose data of a first sensor in the two sensors as targets to interpolate respective pieces of pose data of a second sensor in the two sensors by using a preset interpolation algorithm, wherein the output frequency of the first sensor is smaller than that of the second sensor ⟍S302

determining a difference in pose changes of the any two sensors according to the respective pieces of pose data of the first sensor and respective pieces of pose data of the second sensor after interpolation ⟍S303

determining that the extrinsic parameters of the two sensors have changed if the difference in pose changes reaches a preset difference level ⟍S304

Fig. 3

acquiring respective pieces of pose data of any two sensors in a plurality of sensors at different moments and the extrinsic parameters calibrated in advance for the two sensors ⟍S401

converting the respective pieces of pose data to a same coordinate system according to the extrinsic parameters ⟍S402

determining a difference in pose changes of the two sensors according to respective pieces of pose data after coordinate system conversion ⟍S403

determining that the extrinsic parameters of the two sensors have changed if the difference in pose changes reaches a preset difference level ⟍S404

Fig. 4

acquiring respective pieces of pose data of any two sensors in a plurality of sensors at different moments and the extrinsic parameters calibrated in advance for the two sensors /S501

↓

converting the respective pieces of pose data to a same coordinate system according to the extrinsic parameters /S502

↓

calculating respective relative poses of the two sensors at different moments according to respective pieces of pose data after coordinate system conversion, wherein each relative pose includes the translation amount of the pose data at the current moment relative to the pose data at the previous adjacent moment /S503

↓

for each sensor, summing respective translation amounts of the sensor at different moments to obtain the cumulative result of the translation amounts of the sensor /S504

↓

calculating the ratio between the cumulative results of the translation amounts of the two sensors to obtain a scale factor /S505

↓

performing change scale unification on the pose data of the two sensors according to the scale factor, to obtain respective pieces of pose data after the change scale unification /S506

↓

determining a difference in pose changes of the two sensors according to respective pieces of pose data after the change scale unification /S507

↓

determining that the extrinsic parameters of the two sensors have changed if the difference in pose changes reaches a preset difference level /S508

Fig. 5

acquiring respective pieces of pose data of any two sensors in a plurality of sensors at different moments /S601

↓

determining a difference in pose changes of the two sensors according to the respective pieces of pose data /S602

↓

determining that the extrinsic parameters of the two sensors have changed if the difference in pose changes reaches a preset difference level /S603

↓

re-performing extrinsic parameter calibration on the two sensors according to the newly acquired pose data of the two sensors /S604

Fig. 6

extrinsic parameter change detection

pose acquisition and alignment

extrinsic parameter change detection

pose acquisition

pose interpolation and coordinate transformation

scoring changes of extrinsic parameters

Fig. 7

A Sensor | sensor data → pose acquisition | pose data of A Sensor
B Sensor | sensor data → pose acquisition | pose data of B Sensor
C Sensor | sensor data → pose acquisition | pose data of C Sensor
D Sensor | sensor data → pose acquisition | pose data of D Sensor
X Sensor | sensor data → pose acquisition | pose data of X Sensor

combined in pairs

pose data of A and B Sensors
pose data of A and C Sensors
pose data of A and D Sensors
pose data of B and C Sensors

pose interpolation and coordinate transformation

the pose data of A and D Sensors in one coordinate system

Scoring changes of extrinsic parameters

extrinsic parameter change score result of A and D Sensors

extrinsic parameter change score result of A and B Sensors
extrinsic parameter change score result of A and C Sensors
extrinsic parameter change score result of B and C Sensors

extrinsic parameter change score result

Fig. 8

pose data of monocular camera

pose data of lidar

interpolate the pose data → coordinate transformation of the pose data → scale unification → pose data in a same coordinate system

Fig. 9

interpolate the pose
data

provide
interpolation
timestamp

coordinate
transformation

unified scale

$\Delta T'_{L12}$

$\Delta T_{C12}$

Fig. 10

Pose data in a same coordinate system → Calculate the relative pose deviation / Calculate the weight of relative pose deviation. → Calculate extrinsic parameter change score result → extrinsic parameter change score result

Fig. 11

1210 Acquisition module — 1220 Analysis module — 1230 Detection module

Fig. 12

1301 processor

1302 memory

Fig. 13

1401 electronic device

1402 sensor

1402 sensor

1402 sensor

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010436800

- CN 111060138 A

**Non-patent literature cited in the description**

- **MEDHAT OMR et al.** Using multiple portable/wearable devices for enhanced misalignment estimation in portable navigation. *GPS SOLUTIONS*, 01 April 2016, ISSN 1080-5370